**Europäisches Patentamt**

**European Patent Office**

**Office européen des brevets**

(19)

(11) Publication number: **0 267 639**
**B1**

(12)                     EUROPEAN PATENT SPECIFICATION

(45) Date of publication of the patent specification:
**14.11.90**

(21) Application number: **87201991.4**

(22) Date of filing: **16.10.87**

(51) Int. Cl.⁵: **B65G 47/88**

(54) Device for braking articles to be conveyed on a conveyor and its braking rubber tubes.

(30) Priority: **13.11.86 JP 270397/86**

(43) Date of publication of application:
**18.05.88 Bulletin 88/20**

(45) Publication of the grant of the patent:
**14.11.90 Bulletin 90/46**

(84) Designated Contracting States:
**AT BE CH DE ES FR GB IT LI NL SE**

(56) References cited:
**DE-A- 2 243 906**
**FR-A- 2 049 013**
**GB-A- 1 510 391**
**US-A- 3 934 707**

(73) Proprietor: **AB Tetra Pak, Rabyholms allé, Lund(SE)**

(72) Inventor: **Bergstrom,Anders, Vadmollan,**
**S-225 90 Lund(SE)**
Inventor: **Sevreli,Gösta, Plommonvaegen 32,**
**S-223 55 Lund(SE)**

(74) Representative: **Noz, Franciscus Xaverius, Ir. et al,**
**Algemeen Octrooibureau P.O. Box 645, NL-5600 AP**
**Eindhoven(NL)**

ACTORUM AG

**Description**

The invention relates to a device for conveying articles comprising a conveyor having a flat conveying surface, inflatable braking means arranged opposite each other on both sides of the conveyor in a manner whereby, when the inflatable braking means are inflated they extend towards each other for braking an article, and guide members extending along the sides of the conveyor for guiding the articles being conveyed.

From DE-A 2 243 906 is known a device of this kind for conveying fragile articles, particularly sweets. The inflatable braking means are formed by membranes mounted opposite each other. Any indication about the shape and structure of said membranes has not been given in the description of DE-A 2 243 906. Furthermore, the guide members dont extend along the sidewalls, but instead only up to where the sidewalls begin.

It is an aim of the invention to obtain a device of the kind wherein the flatness of braking surfaces is maintained, so that the braking means can cooperate with objects having flat and vulnerable surfaces like paper containers.

Now, according to the invention the braking means are formed by inflatable rubber tubes mounted on upstanding side walls extending along either side of the conveyor, whereby each rubber tube comprises a flat outer wall defining a braking surface and a connecting wall for connecting the rubber tube to a side wall, said outer wall and said connecting wall extending substantially parallel to said side wall, being interconnected at their upper and lower ends by side wall sections and defining a hollow portion, wherein is accomodated a reinforcing part fixed to the inner side of the outer wall, and that said guide members are disposed at positions which are proximate to and extending along the upper portions of each side wall and the lower portions of each rubber tube.

Thereby with the guide members is obtained that the article maintains a position for smoothly cooperating with the flat braking surfaces.

Preferably in vertical cross-section a rubber tube has the shape of a parallelogram, wherein the side wall sections extend from the connecting wall in an upward direction towards the outer wall and wherein the lowermost side wall section is thinner than the uppermost side wall section.

By using such a structure, an article will be lifted in an upward direction from the conveying surface, if braked by inflating the elastic tubes.

A description of an embodiment according to the present invention will be made in conjunction with the accompanying drawings as follows:

Fig. 1 is a front view of a braking device according to the present invention,
Fig. 2 is a plan view showing main portion of the braking device,
Fig. 3 (a) is a schematic and enlarged sectional view along line A-A of Fig. 1 illustrating the relationship of the rubber tubes to an article to be conveyed,

Fig. 3 (b) is a sectional view illustrating a condition when rubber tubes are fed with air and said rubber tubes are thereby inflated to interpose an article to be conveyed,
Fig. 4 (a) is a schematic and enlarged sectional view illustrating the relationship of rubber tubes in another embodiment to an article to be conveyed, and
Fig. 4 (b) is a sectional view illustrating a condition when rubber tubes of Fig. 4 (a) are fed with air and thereby said rubber tubes are inflated to interpose an article to be conveyed.

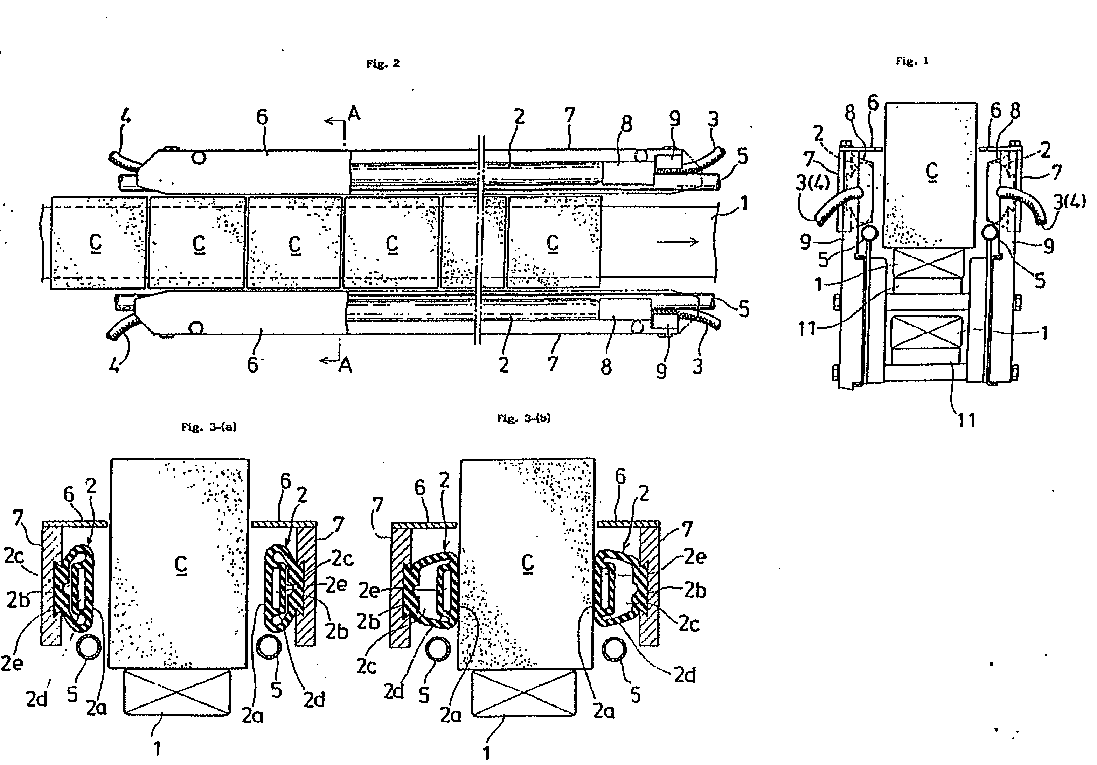

Fig. 1 is a front view of device for braking of the present invention.
Fig. 2 is a front view showing main portion of said braking device so arranged as to brake articles to be conveyed (C) on a conveyor (1), which represent paper packaging containing liquid foods such as milk and juice.

Conveyor 1, having a flat traversing surface has the form of a linked chain that is capable of curving its traversing direction and, though not illustrated, a part of conveyor 1 being in an upper position and another part of the conveyor 1 being in a lower position are so arranged to move in a reverse direction with each other in order that both conveyor parts may make respective circular movements on upper and lower supporting plates 11, provided in the present device and they may be connected to conveyor supporting plates that are arranged on the outside of the present device in accordance with conveyor 1 passage. Furthermore, Fig. 2 shows the upper conveyor 1 moving to the right.

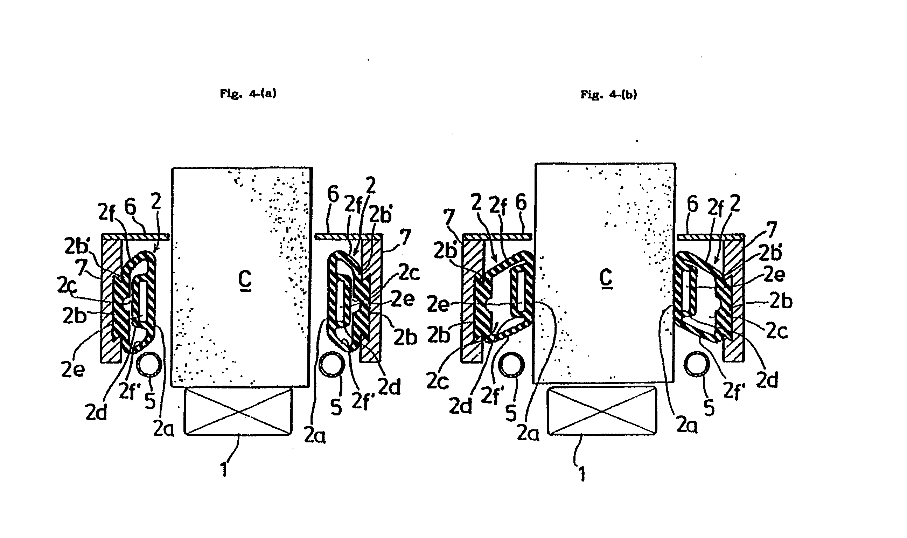

On the both sides of supporting plates 11, that are passages of a conveyor 1, there are in positions corresponding to the lower portion of an article to be conveyed C, being spaced with a predetermined distance, a pair of guide pipes 5, 5 that are side guide members of the article to be conveyed C in a manner that they are connected to guide pipes outside the device, and on the both side ends in a lengthwise direction of the device (left and right directions of Fig. 2) at the outside of said pipes, a pair of support 9, are provided in a manner that the passage of an article to be conveyed is interposed with the upper portions of the supports. Mounting the upper portion of a pair of left and right supports arranged in a lengthwise direction, a pair of side walls 7 that are base plates to attach rubber tubes are connected to respective supports 9, so that they face each other interposing the conveyor passage. At each of side walls 7, facing each other and in the lengthwise direction of the side walls, rubber tubes 2, of predetermined length are attached by way of inserting into dovetail grooves on both sides of the attaching wall part 2b (Fig. 3). Positions of said rubber tubes 2,are determined with clamps 8 at their respective ends. Air feeding pipes 3 are attached on one side of said clamps 8 and air exhausting pipes 4 at another side of said clamps 8. By means of electromagnetic valves, which are not illustrated, compressed air can be fed via the air feeding pipes 3, and the inflation and contraction of rubber tubes 2 are performed by adequately closing and opening the valves. On the upper side surface of side walls 7 that are base plates to attach rubber tubes facing each other, for guiding an article to be conveyed C so that it is not laterally slided on a convey of the present braking device, a pair of side guide elements 6 in the form of plates having obliquely cut end-edge part at least at its carriage-in end are provided so that the article to be conveyed C may be guided with an adequate space maintained between the article and the members.

Said rubber tube 2 is, as shown in Fig. 3 (a), provided with wall part having flat braking surface 2a and attaching wall part 2b which interpose between them a hollow section 2c, which is narrow and small in a condition when it is not fed with air and not braked and which may be inflated when braked by a feeding compressed air (Fig. 3(b)), the wall part having the braking surface 2a being provided with reinforcing part 2d having lightened part 2e at the back of the braking surface, that is to say, on the side of hollow section 2c to maintain its flat condition so that the braking surface is not deformed, and when feeding air into rubber tube 2 and braking the article to be conveyed, the braking surface 2a is capable of maintaining the flatness without deforming, being in contact with the article to be conveyed C and efficiently performing a braking action.

When the present braking device is set at the required position of conveyor lines for paper packaging that is an article to be conveyed, rubber tubes 2 are made to inflate by opening an electromagnetic valve, which is not illustrated (electromagnetic valve on the side of air exhausting pipe 4 is being closed at this time) and by feeding compressed air via air feeding pipe 3, both sides of the article C to be conveyed on the operated and moving conveyor are interposed with said rubber tubes 2, consequently the article is prevented from moving and maintains its stopping position while sliding on conveyor 1 (Fig. 3 (b)). Moreover, it is also possible to lower the moving speed of the article to be conveyed at the area of braking device depending on the internal pressure of rubber tube 2.

Said rubber tubes 2, facing each other are swift to act because compressed air is fed by operating the electromagnetic valve, and there is not the fear of damaging to the article to be conveyed as the braking surface is made of rubber. And furthermore, with no opertion of hard machinery parts, the braking action may be performed quietly and smoothly. Fig. 4(a), fig. 4(b) are schematic sectional views showing the relationship of a pair of rubber tubes 2, to articles to be conveyed C in another improved embodiment.

Rubber tube 2 is, as is in the previously described embodiment and illustrated in fig 4(a), provided with wall part having flat braking surface 2a and attaching wall part 2b which interpose between them hollow section 2c, which is narrow and small in a condition when it is not fed with air and not braked and which may be inflated when braked by feeding compressed air (fig. 4(b)), the wall part having the braking surface 2a being provided with reinforcing part 2d having lightened part 2e for maintaining the flatness at its back and being connected to front face wall 2b, of attaching wall part 2b via a thick wall 2f and a thin wall 2f, that are inclined, and is used by attaching a tube formed in an approximate parallelogram with the thick wall positioned upward. The arrangement in this manner will make the elongating proportion greater for the thin wall 2f, than for the thick wall 2f, and thereby the lower part of the braking surface 2 tends to be lifted when the rubber tube is inflated. Therefore, when an article to be conveyed C on a conveyor, is interposed, the article to be conveyed C will be slightly lifted from the top surface of the conveyor.

Consequently, when an article to be conveyed is interposed with rubber tubes 2 on a conveyor 1 and stopped, the bottom of said article C is disconnected from the top surface of the conveyor 1 and said bottom is prevented from being damaged by rubbing with the top surface of the conveyor.

In the embodiment shown and described the face of the side wall 7 supporting the tube 2 extends substantially perpendicular to the plane containing the upper face of the conveyor 1 supporting the articles 3 C. However it will be clear that said face of the side wall 7 could be arranged slantwise with respect to the plane containing the upper face of the conveyor 1. Thereby the tube 2 will be shaped so that a wall part will abut the side wall 7 in a similar way as shown for wall part 2b in the drawings whilst an opposite wall part for co-operating with the articles C will extend with respect to the conveyor in a similar way as wall part 2a shown in the drawings and described above.

## Claims

1. A device for conveying articles comprising a conveyor (1) having a flat conveying surface, inflatable braking means (2) arranged opposite each other on both sides of the conveyor (1) in a manner, whereby, when the inflatable braking means (2) are inflated, they extend towards each other for braking an article, and guide members (5, 6) extending along the sides of the conveyor (1) for guiding the articles being conveyed, characterized in, that the braking means are formed by inflatable rubber tubes (2) mounted on upstanding side walls (7) extending along either side of the conveyor, whereby each rubber tube (2) comprises a flat outer wall (2a) defining a braking surface (2a) and a connecting wall (2b) for connecting the rubber tube to a side wall (7), said outer wall (2a) and said connecting wall (2b) extending substantially parallel to said side wall (7), being interconnected at their upper and lower edges by side wall sections and defining a hollow portion (2c) wherein is accomodated a reinforcing part (2d) fixed to the inner side of the outer wall (2a), and that (5, 6) are disposed at positions which are proximate to and extending along the upper portions of each side wall (7) and the lower portions of each rubber tube (2).

2. A device according claim 1, characterized in, that in vertical cross-section a rubber tube (2) has substantially the shape of a parallelogram, wherein the side wall sections (2f, 2f') extend from the connecting wall (2b) in an upward direction towards the outer wall and wherein the Lowermost side wall section (2f') is thinner than the uppermost side wall section (2f).

## Patentansprüche

1. Vorrichtung zum Fördern von Gegenständen mit einem Förderer (1), der eine ebene Förderfläche besitzt, aufblasbaren Bremsmitteln (2), die einander gegenüberliegend auf beiden Seiten des Förderers (1) derart angeordnet sind, daß sie sich im aufgeblasenen Zustand zum Bremsen eines Gegenstandes aufeinanderzu erstrecken, sowie Führungsteilen (5, 6), die sich zur Führung der geförderten Gegenstände längs der Seiten des Förderers (1) erstrecken, dadurch gekennzeichnet, daß die Bremsmittel durch aufblasbare Kautschukrohre (2) gebildet sind, die an hochstehenden, sich längs jeder Seite des Förderers erstreckenden Seitenwänden (7) befestigt sind, wobei jedes Kautschukrohr (2) eine ebene, eine Bremsfläche (2a) bildende Außenwandung (2a) und eine das Kautschukrohr mit der Seitenwand (7) verbindende Verbindungswandung (2b) aufweist, wobei sich die Außenwandung (2a) und die Verbindungswandung (2b) im wesentlichen parallel zu der Seitenwand (7) erstrecken und an ihren oberen und unteren Kanten über Seitenwandungsabschnitte verbunden sind und hierdurch einen Hohlbereich (2c) bilden, in dem ein an der Innenseite der Außenwandung (2a) befestigtes Versteifungsteil (2d) untergebracht ist, und wobei die Führungsteile (5, 6) an Positionen in der Nähe sowie in Längserstreckung zu den oberen Bereichen jeder Seitenwandung (7) sowie den unteren Bereichen jedes Kautschukrohrs (2) angeordnet sind.

2. Vorrichtung nach Anspruch 1, dadurch gekennzeichnet, daß ein Kautschukrohr (2) einen vertikalen Querschnitt im wesentlichen in der Form eines Parallelogramms aufweist, wobei die Seitenwandungsabschnitte (2f, 2f') sich von der Verbindungswandung (2b) in einer Aufwärtsrichtung zu der Außenwandung erstrecken, und wobei der untere Seitenwandungsabschnitt (2f') dünner als der obere Seitenwandungsabschnitt (2f) ist.

## Revendications

1. Dispositif pour le transport d'articles qui comprend un transporteur (1) présentant une surface de transport plane, des moyens de freinage gonflables (2) prévus en opposition mutuelle de part et d'autre du transporteur (1) d'une manière telle que, lorsque les moyens de freinage gonflables (2) sont gonflés, ils se dilatent l'un vers l'autre pour freiner un article, et des éléments de guidage (5, 6) qui s'étendent le long des côtés du transporteur (1) pour guider les articles transportés, caractérisé en ce que les moyens de freinage sont constitués par des tubes de caoutchouc gonflables (2) montés sur des plaques latérales verticales (7) s'étendant le long de chaque côté du transporteur, chaque tube de caoutchouc (2) comprenant une paroi extérieure plane (2a), qui définit une surface de freinage (2a), et une paroi de fixation (2b) pour fixer le tube de caoutchouc à une plaque latérale (7), ladite paroi extérieure (2a) et ladite paroi de fixation (2b) étant sensiblement parallèles à ladite plaque latérale (7), étant interconnectées à leurs bords supérieurs et inférieurs par des parois latérales et définissant une région creuse (2c) dans laquelle est logé un élément de renforcement (2d) fixé à la face intérieure de la paroi extérieure (2a), et en ce que lesdits éléments de guidage (5, 6) sont situés à des positions qui sont proches et s'étendent le long des parties supérieures de chaque plaque latérale (7) et des parties inférieures de chaque tube en caoutchouc (2).

2. Dispositif suivant la revendication 1, caractérisé en ce que, en section verticale, un tube de caoutchouc (2) a sensiblement la forme d'un parallélogramme, dont les parois latérales (2f, 2f') s'étendent à partir de la paroi de fixation (2b) vers le haut et vers la paroi extérieure, et dont la paroi latérale inférieure (2f') est plus mince que la paroi latérale supérieure (2f).

Fig. 1

Fig. 2

Fig. 3-(a)

Fig. 3-(b)

Fig. 4-(a)

Fig. 4-(b)